# EUROPÄISCHE PATENTANMELDUNG

(11) **EP 4 606 673 A1**
(43) Veröffentlichungstag der Anmeldung: **27.08.2025**
(21) Anmeldenummer: 25158458.7
(22) Anmeldetag: 18.02.2025
(51) Int. Cl.: B61D 33/00, B60N 2/00

(54) **SITZBLOCKIERSYSTEM FÜR EIN SCHIENENFAHRZEUG**

(30) Priorität: 20.02.2024 AT 501372024
(71) Anmelder: Siemens Mobility Austria GmbH, 1210 Wien (AT)
(72) Erfinder: Die Erfindernennung liegt noch nicht vor
(74) Vertreter: Siemens Patent Attorneys

(57) **Zusammenfassung**

Sitzblockiersystem (13) für ein Schienenfahrzeug, umfassend mindestens einen Passagiersitz (1), welcher bewegliche Komponenten (2, 5) umfasst, und welcher durch Krafteinwirkung auf diese Komponenten (2, 5) entweder in eine Gebrauchsposition oder eine blockierte Position bewegbar ist, wobei eine elektromechanische Verriegelung (10) an dem Passagiersitz (1) vorgesehen ist, welche die beweglichen Komponenten (2, 5) des Sitzes in ihrer blockierten Position fixieren kann und eine Steuereinrichtung (8) zur Ansteuerung der elektromechanischen Verriegelung (10) vorgesehen ist, welche nach bestimmten Zustandsgrößen die elektromechanische Verriegelung (10) ansteuert, sodass diese die beweglichen Komponenten (2, 5) in der blockierten oder der Gebrauchsposition des Passagiersitzes (1) fixiert.

## Beschreibung

### Technisches Gebiet

Die Erfindung betrifft ein Sitzblockiersystem für Passagiersitze in einem Schienenfahrzeug.

### Stand der Technik

In Verkehrsmitteln für den Personentransport über weitere Strecken, insbesondere Reisezügen, ist es gebräuchlich, dass mit dem Erwerb einer Fahrkarte auch eine Reservierung eines Sitzplatzes vorgenommen werden kann. Diese Reservierung ist im Fahrzeug ausgeschildert, bei neuen Fahrzeugen erfolgt dies mittels eines Displays in unmittelbarer Nähe des reservierten Sitzplatzes. In der Praxis bestehen jedoch Probleme, wenn die Reservierung durch Fahrgäste nicht gewürdigt wird und unter den Passagieren Diskussionen über den Reservierungsstand eines Sitzplatzes entstehen, welche durch das Zugbegleitpersonal gelöst werden müssen. Dies kann im Besonderen dann auftreten, wenn wie üblich, das die Reservierung anzeigende Display einige Zeit nach Fahrtantritt gelöscht wird und die Reservierung somit nicht mehr ersichtlich ist. Verläßt ein Fahrgast kurzzeitig seinen reservierten Sitzplatz, so ist er gezwungen, persönliche Gegenstände an dem Sitzplatz zurückzulassen um Dritten anzuzeigen, dass der betreffende Sitzplatz belegt ist. Dies könnte vermieden werden, wenn der reservierte Sitzplatz so gestaltet ist, dass er durch einen Berechtigten in eine unbenutzbare Position gebracht werden kann, beispielsweise durch Hochklappen der Sitzfläche, ähnlich einem Kino- oder Theatersitz. In Kinos und Theatern waren solche Sitze vor Jahrzehnten als sogenannte "Sperrsitze" im Einsatz und konnten nur mittels eines zugehörigen Schlüssels in Gebrauchsposition gebracht werden. Für den Einsatz in Verkehrsmitteln für den Personentransport ist eine solche Lösung jedoch nicht praktikabel, da sie die Übergabe und Rücknahme eines Schlüssels erfordert, wobei erfahrungsgemäß Schlüssel verlorengehen können und das Fahrpersonal demnach Ersatzschlüssel mitführen müsste. Ebenso muss ein Blockieren eines nicht reservierten Sitzes sowie eine Blockierung durch Unbefugte verläßlich verhindert werden. Ebenso ist eine nur über eine Teilstrecke einer Fahrt aufrechte Reservierung zu berücksichtigen. Eine für den Bahnbetrieb taugliche Lösung ist mit den Mitteln des Standes der Technik nicht möglich.

### Darstellung der Erfindung

Der Erfindung liegt daher die Aufgabe zugrunde, ein Sitzblockiersystem für ein Schienenfahrzeug anzugeben, welches es ermöglicht, einen Passagiersitz durch eine berechtigte Person zu blockieren, sodass dieser Sitz für nichtberechtigte Personen nicht nutzbar wird.

Die Aufgabe wird durch ein Sitzblockiersystem für ein Schienenfahrzeug mit den Merkmalen des Anspruchs 1 gelöst. Vorteilhafte Ausgestaltungen sind Gegenstand untergeordneter Ansprüche.

Dem Grundgedanken der Erfindung nach wird ein Sitzblockiersystem für ein Schienenfahrzeug beschrieben, welches mindestens einen Passagiersitz mit beweglichen Komponenten umfasst, wobei durch Krafteinwirkung auf diese Komponenten diese entweder in eine Gebrauchsposition oder eine blockierte Position bewegbar sind, wobei eine elektromechanische Verriegelung an dem Passagiersitz vorgesehen ist, welche die beweglichen Komponenten des Sitzes in ihrer blockierten Position oder der Gebrauchsposition fixieren kann und eine Steuereinrichtung zur Ansteuerung der elektromechanischen Verriegelung vorgesehen ist, welche nach bestimmten Zustandsgrößen die Verriegelung ansteuert, sodass diese die beweglichen Komponenten in der blockierten oder der Gebrauchsposition des Passagiersitzes fixiert.

Dadurch ist der Vorteil erzielbar, dass ein Passagiersitz durch einen berechtigten Nutzer so blockiert werden kann, dass er für nichtberechtigte nicht nutzbar ist. Dabei ist es wesentlich, dass eben nur berechtigte Nutzer diese Blockierung ausführen können. Da die Information über den Reservierungsstand einzelner Sitze oftmals nach Beginn der Fahrt eines Zuges nicht mehr angezeigt wird oder Dritte die Reservierung eines Sitzes ignorieren könnten, verhindert das erfindungsgemäße System die Nutzung eines reservierten Sitzes durch Nichtberechtigte.

Als Berechtigte sind dabei jene Fahrgäste anzusehen, welche eine gültige Fahrkarte für den betreffenden Zug als auch eine aufrechte Reservierung für den betreffenden Passagiersitz besitzen. Ebenso als berechtigt ist das Zugpersonal anzusehen.

Dabei ist auf die jeweils aktuelle Reservierung über den Verlauf der Fahrtstrecke zu achten, welcher sich insbesondere bei Fernverkehrszügen auch mehrmals verändern kann, wenn Passagiere nur Teilstrecken buchen.

Erfindungsgemäß umfasst das Sitzblockiersystem mindestens einen Passagiersitz, welcher bewegliche Komponenten aufweist. Diese beweglichen Komponenten sind zwischen zwei Endstellungen bewegbar ausgeführt, wobei in einer Position der Komponenten der Passagiersitz nicht nutzbar ist. Beispielsweise kann die Sitzfläche eines Passagiersitzes nach Art gebräuchlicher Kino- oder Theatersitze ausgeführt sein, sodass sie in vertikale Position schwenkbar ist und folgedessen der Sitz unbenutzbar ist.

Weitere Ausführungsformen sehen insbesondere vor, die beweglichen Komponenten des Sitzes als Abschnitt einer Sitzfläche auszubilden, welche schwenkbegeglich gegenüber einem feststehenden Abschnitt dieser Sitzfläche gelagert ist, wobei in blockierter Position des Passagiersitzes die beweglichen Komponenten wenigstens teilweise über dem feststehenden Abschnitt der Sitzfläche zu liegen kommen. Ein solcher Sitz ist in seiner blockierten Position nicht benutzbar und auch klar als blockiert erkennbar.

Eine weitere bevorzugte Ausführungsform eines erfindungsgemäßen Passagiersitzes sieht vor, die beweglichen Komponenten des Sitzes als Abschnitt einer Armlehne auszubilden, welche schwenkbegeglich gegenüber einem feststehenden Abschnitt dieser Armlehne gelagert ist, wobei in blockierter Position des Passagiersitzes die beweglichen Komponenten über die Sitzfläche geschwenkt sind. Auch diese Lösung lässt eine Benutzung durch Nichtberechtigte nicht zu.

Das erfindungsgemäße System sieht vor, die beweglichen Komponeten des Sitzes in ihrer blockierten Position fixieren zu können, wozu eine entsprechende mechanische Einrichtung an der Verbindungsstelle zwischen den beweglichen Komponenten und dem restlichen Passagiersitz anzuordnen ist, welche die erforderliche Schwenk- bzw. Drehbeweglichkeit erlaubt. Dabei ist vorzusehen, dass die beweglichen Komponenten des Sitzes sowohl in ihrer blockierten Position als auch der Gebrauchsposition verriegelbar sind und nur nach Ansteuerung einer elektromechanischen Verriegelung von einer in die andere Position gebracht werden können. Solcherart ist sichergestellt, dass ein Passagiersitz nicht mutwillig durch Unberechtigte in seine blockierte Position gebracht werden oder aus ihr wieder zurückgebracht werden kann.

Die Ansteuerung dieser elektromechanischen Verriegelung erfolgt durch eine Steuereinrichtung, welche nach bestimmten Zustandsgrößen die Verriegelung ansteuert. Dabei ist die Steuereinrichtung zum Empfang eines, ein Identifikationsmerkmal representierendes Signals von der Identifikationseinrichtung und zum Empfang von mindestens einem weiteren Signal von einer übergeordneten Kontrolleinrichtung eingerichtet.

Das Identifikationsmerkmal dient der Identifizierung eines berechtigten Nutzers und ist ausschließich diesem zugewiesen. Es kann beispielsweise in der Form eines auf einer Fahrkarte aufgedruckten Barcodes, eines drahtlos an ein mobiles Endgerät eines Berechtigten übermittelten Barcodes oder auch als Funksignatur, insbesondere als NFC-Funksignatur ausgeführt sein. Als Barcode können 1- und 2-dimensionale Barcodes eingesetzt werden.

Die Identifikationseinrichtung selbst ist in räumlicher Nähe zu dem betreffenden Passagiersitz anzuordnen, sodass sie dem berechtigten Passagier einfach zugänglich ist. Dabei können mehreren Passagiersitzen eine gemeinsame Identifikationseinrichtung zugeordnet ein, beispielsweise kann bei einer Sitzgruppe aus vier Pasagiersitzen eine einzige Identifikationseinrichtung ausreichend sein, wenn dem Nutzer diese Zuordnung klar ersichtlich ist.

Die Steuereinrichtung ist zum Empfang eines, ein Identifikationsmerkmal representierendes Signals von der Identifikationseinrichtung und zum Empfang von mindestens einem weiteren Signal von einer übergeordneten Kontrolleinrichtung eingerichtet und setzt diese empfangenen Signale als Zustandsgrößen zur Ansteuerung der Verriegelung ein. Dieses mindestens eine weitere Signal representiert vorteilhafterweise den aktuellen Reservierungszustand des betreffenden Passagiersitzes und wird von einer übergeordneten Kontrolleinrichtung an die Steuereinrichtung übermittelt. Dazu ist der Verlauf des Reservierungsstatus über den Reiseverlauf des Fahrzeugs in der Kontrolleinrichtung gespeichert vorzuhalten und Informationen über den aktuellen Reservierungsstatus an die Steuereinrichtung zu übermitteln. Zusätzlich zu dem Reservierungsstatus umfassen die in der Kontrolleinrichtung gespeicherten und an die Steuereinrichtung zu übermittelnden Daten auch das jeweilige Identifikationsmerkmal, sodass die Zustandsgrößen zur Ansteuerung der Verriegelung immer auf den momentan aktuellen Reservierungsstatus beruhen. Solcherart ist auch sichergestellt, dass immer der korrekte Benutzer zur Aktivierung bzw. Deaktivierung des Sitzblockiersystems ermächtigt ist.

Fährt ein Fahrgast beispielsweise nur eine Teilstrecke, so erlischt nach dieser Teilstrecke die Gültigkeit seines Identifikationsmerkmals, z.B ein auf seiner Fahrkarte gedruckter Barcode nach dem Erreichen seiner Fahrziels. Es ist vorteilhaft, die Steuereinrichtung zu auszuführen, dass sie nach dem Erreichen des Endes einer reservierten Teilstrecke die Sitzblockierung jedenfalls löst, sodass der Passagiersitz wieder verwendbar wird. Solcherart wird verhindert, dass ein Vergessen des Lösens der Blockierung durch einen Passagier seinen Sitz längere Zeit, auch über seine Fahrstrecke hinaus blockiert.

Es ist vorteilhaft, ein Identifikationsmerkmal vorzusehen, welches von dem Sitzblockiersystem als mit einer Sonderberechtigung versehen erkannt wird und welcher jede beliebige Handlung, also Blockieren und Lösen erlaubt. Ein solches Identifikationsmerkmal kann dem Zugpersonal zugeordnet werden, welches damit unabhängig vom Reservierungszustand eines bestimmten Passagiersitzes diesen sperren oder entsperren kann.

Eine bevorzugte Ausführungsform der Erfindung sieht vor, die Krafteinwirkung auf die beweglichen Komponenten des Passagiersitzes zur Bewegung von einer Gebrauchsposition in eine blockierte Position oder von einer blockierten Position in eine Gebrauchsposition ausschließlich durch manuelle Kraft aufzubringen. Dadurch ist der Bauaufwand für ein erfindungsgemäßes Sitzblockiersystem minimiert. Jedoch kann für höhere Ansprüche diese Bewegung zumindest teilweise auch durch eine technisch freigemachte Kraft erfolgen. Beispielsweise kann diese Kraft eine Federkraft sein, welche eine bewegliche Komponente in eine ihrer Endpositionen bewegt, nachdem ein Benutzer die Sitzblockierfunktion auslöst und die Verriegelung angesteuert, d.h. gelöst wird. Diese Feder wird bei einem manuellen Rückführen in die Ausgangsposition wieder gespannt.

Für höchste Ansprüche kann die Bewegung der beweglichen Komponenten des Passagiersitzes auch elektromotorisch erfolgen. Dazu ist die Steuereinrichtung mit entsprechenden Ausgängen zur Ansteuerung von Elektromotoren auszustatten.

### Kurzbeschreibung der Zeichnungen

### Es zeigen beispielhaft:

**Fig.1** Passagiersitz - schwenkbare Sitzfläche - Gebrauchsposition.
**Fig.2** Passagiersitz - schwenkbare Sitzfläche - blockierte Position.
**Fig.3** Passagiersitz - schwenkbare Armlehnen - Gebrauchsposition.
**Fig.4** Passagiersitz - schwenkbare Armlehnen - blockierte Position.
**Fig.5** Passagiersitz - einseitig schwenkbare Armlehne - blockierte Position.
**Fig.6** Sitzreservierungssystem - Blockschaltbild.

### Ausführung der Erfindung

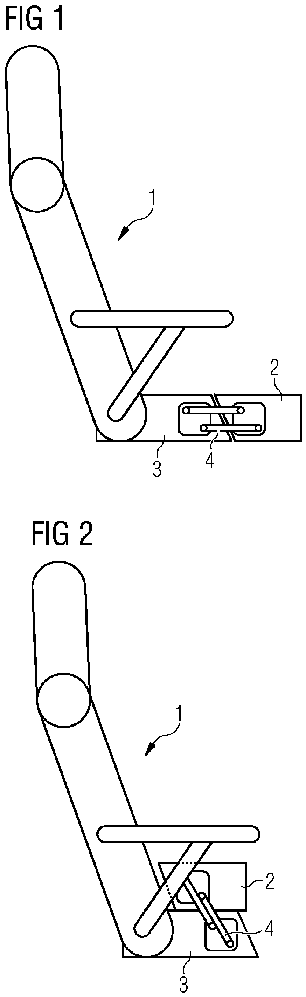

**Fig.1** zeigt beispielhaft und schematisch einen Passagiersitz mit einer schwenkbaren Sitzfläche in Gebrauchsposition. Es ist ein Passagiersitz 1 dargestellt, welcher in einem erfindungsgemäßen Sitzreservierungssystem einsetzbar ist und welcher eine Sitzfläche umfasst, die in einen feststehenden Teil 3 und einen beweglichen Teil 2 geteilt ist. Der bewegliche Teil 2 ist gegenüber dem feststehenden Teil 3 mittels einer Schwenkvorrichtung 4 beweglich angeordnet, sodass der bewegliche Teil 2 zwischen zwei Endpositionen manuell beweglich ist. In der in Fig.1 gezeigten ersten Endposition, der Gebrauchposition, befindet sich der Passagiersitz 1 in einer zur Benutzung durch einen Passagier geeigneten Position, der bewegliche Teil 2 bildet zusammen mit dem feststehenden Teil 3 der Sitzfläche eine gemeinsame Sitzfläche.

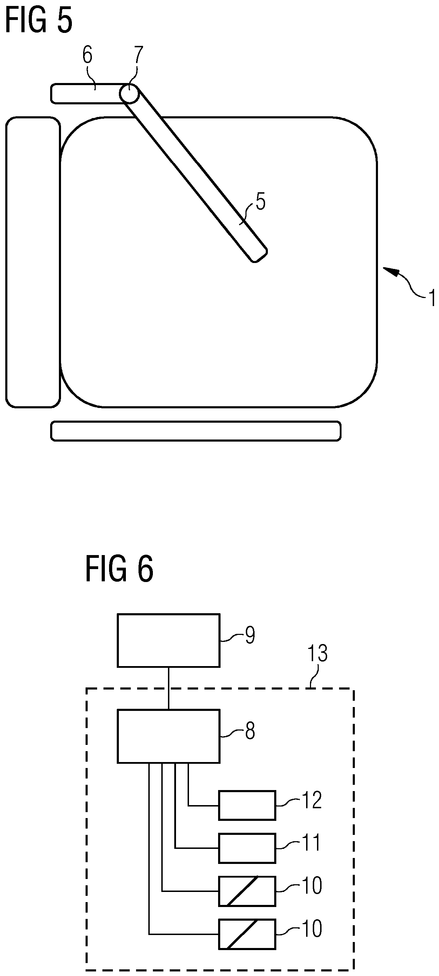

**Fig.2** zeigt beispielhaft und schematisch einen Passagiersitz mit einer schwenkbaren Sitzfläche in blockierter Position. Es ist der Passagiersitz 1 aus Fig.1 in blockierter Position dargestellt, in welcher der bewegliche Teil 2 der Sitzfläche mittels der Schwenkvorrichtung 4 in jene Endposition geschwenkt ist, in welcher der bewegliche Teil 2 teilweise über den feststehenden Teil 3 zu liegen kommt. In dieser Position, der blockierten Position, ist der Passagiersitz 1 nicht zur Benutzung geeignet, da er keine Sitzfläche bietet. In dieser, in Fig.2 gezeigten Position kann der Passagiersitz durch einen berechtigten Benutzer mechanisch blockiert werden, sodass der Sitz für den berechtigten Benutzer reserviert ist. Die dazu erforderlichen weiteren Komponenten des Sitzblockiersystems sind in dieser Darstellung nicht enthalten, sie werden in der Beschreibung zu Fig.6 detailliert erläutert.

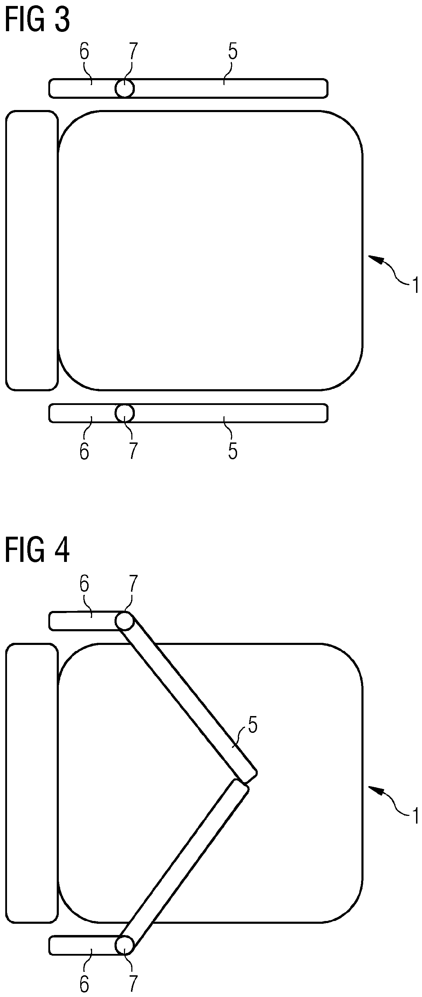

**Fig.3** zeigt beispielhaft und schematisch einen Passagiersitz mit schwenkbaren Armlehnen in Gebrauchsposition. Es ist eine weitere Ausführung eines Passagiersitzes 1 dargestellt, welche in einem erfindungsgemäßen Sitzreservierungssystem einsetzbar ist. Das gezeigte Ausführungsbeispiel weist im Gegensatz zu dem in den Fig.1 und 2. gezeigten Passagiersitz eine durchgehend feste Sitzfläche auf, wobei beide Armlehnen in jeweils einen beweglichen Teil 5 und einen feststehenden Teil 6 geteilt sind. Die beweglichen Teile 5 sind dabei mit ihren zugehörigen feststehenden Teile 6 jeweils mittels eines Schwenkscharniers 7 schwenkbeweglich verbunden. Dabei können die beweglichen Teile 5 zwischen zwei Endpositionen manuell bewegt werden. Fig.3 stellt die Gebrauchsposition des Passagiersitzes 1 dar, in welcher die beweglichen Teile 5 der Armlehnen eine lineare Fortsetzung der feststehenden Teile 6 bilden. Es ist der Passagiersitz 1 in einer Ansicht von oben dargestellt, wobei wobei die erforderlichen weiteren Komponenten des Sitzblockiersystems in dieser Darstellung nicht enthalten sind.

**Fig.4** zeigt beispielhaft und schematisch einen Passagiersitz mit schwenkbaren Armlehnen in blockierter Position. Es ist der Passagiersitz 1 aus Fig.3 dargestellt, wobei die beweglichen Teile 5 der Armlehnen in jener Endposition befindlich sind, welche der blockierten Position des Passagiersitzes 1 entsprechen. Dabei sind die beweglichen Teile 5 der Armlehnen über die Sitzfläche des Passagiersitzes 1 geschwenkt, sodass dieser nicht zur Benutzung geeignet ist. Die Schwenkscharniere 7 sind arretierbar auszuführen, sodass die beweglichen Teile 5 in der gezeigten Endposition gehalten werden können und nur durch einen berechtigten Benutzer wieder in die Gebrauchsposition zurückgeführt werden können. Die Schwenkscharniere 7 sind so auszuführen, dass die beweglichen Teile 5 auch in Gebrauchsposition verriegelt sind, sodass die Armlehnen optimal benutzbar sind.

**Fig.5** zeigt beispielhaft und schematisch einen Passagiersitz mit einer einseitig schwenkbaren Armlehne in blockierter Position. Es ist eine weitere Ausführungsform eines Passagiersitzes 1 dargestellt, bei welchem zur Vereinfachung der Konstruktion nur eine der beiden Armlehnen in einen beweglichen Teil 5 aufweist. Dabei ist nur ein Schwenkscharnier 7 erforderlich und die Blockierungswirkung entspricht fast jener eines Passagiersitzes 1 mit zwei beweglichen Teilen 5.

**Fig.6** zeigt beispielhaft und schematisch ein Blockschaltbild eines Sitzblockiersystems. Es ist ein Blockschaltbild eines Sitzblocksystems 13 dargestellt, welches eine Datenverbindung zu einer Kontrolleinrichtung 9 aufweist. Die Kontrolleinrichtung 9 kann dabei als Fahrzeugsteuerung mit einem Reservierungssystem ausgeführt sein, welche Daten über den aktuellen Reservierungsstand der Passagiersitze gespeichert vorhält. Das Sitzblockiersystem 13 umfasst eine Steuereinrichtung 8, welche eingerichtet ist, ein Display 12 anzusteuern, sodass auf dem Display Daten betreffend des aktuellen Reservierungsstands der zugehörigen Passagiersitze angezeigt werden. Das gezeigte Ausführungsbeispiel ist für eine Gruppe mit zwei Passagiersitzen ausgebildet, deren jeweiliger Reservierungsstand gemeinsam an dem Display 12 angezeigt werden. Ebenso ist eine gemeinsame Identifikationseinrichtung 11 mit der Steuereinrichtung 8 verbunden, welche eingerichtet ist, ein Identifikationsmerkmal aufzunehmen und ein dieses Identifikationsmerkmal representierendes Signal an die Steuereinrichtung 8 zu übermitteln. Das Ausführungsbeispiel aus Fig.6 zeigt allgemein eine Identifikationseinrichtung 11, die konkrete Ausführung wie beispielsweise ein Barcodescanner oder ein NFC-Lesegerät ist nicht bestimmt, da es an die konkrete Aufgabenstellung angepasst werden kann. Die Steuereinrichtung 8 ist ausgebildet, zwei elektromagnetische Verriegelungen 10 anzusteuern, welche beispielsweise mit den Schwenkvorrichtungen 4 der in den Fig.1 und 2 gezeigten Passagiersitzen zusammenarbeiten. Der Funktionsablauf eines Sitzblockiersystems stellt sich folgendermaßen dar: Weist eine berechtigte Person ein Identifikationsmerkmal an der Identifikationseinrichtung 11 vor, beispielsweise durch Einlesen eines auf einer Fahrkarte aufgedruckten Barcodes, so wird das Sitzblockiersystem in einen Blockiermodus für einen bestimmten, der berechtigten Person zugewiesenen Sitzplatz geschalten. Dabei wird ggf. eine zugehörige elektromagnetische Verriegelung 10 angesteuert und eine Schwenkvorrichtung 4 oder ein Schwenkscharnier 7 entriegelt, sodass die berechtigte Person den ihr zugewiesenen Passagiersitz 1 in seine blockierte Position bringen kann. In dieser blockierten Position rastet die Schwenkvorrichtung 4 oder das Schwenkscharnier 7 ein und hält die entsprechenden Komponenten (bewegliche Teile der Sitzfläche oder Armlehne) in blockierter Position. Der Passagiersitz 1 ist somit vor unberechtigten Nutzung gesperrt und die berechtigte Person kann die unmittelbare Nähe ihres Sitzplatzes verlassen. Kehrt die berechtigte Person zu dem Passagiersitz 1 zurück, so weist sie ihr Identifikationsmerkmal an der Identifikationseinrichtung 11 vor, die Steuereinrichtung 8 ermittelt daraufhin aus dem von der Identifikationseinrichtung 11 an sie übermittelten, das Identifikationsmerkmal representierende Signal und dem von der Kontrolleinrichtung 9 an die Steuereinrichtung übermittelten Reservierungsstand des betreffenden Passagiersitzes 1 die bestimmten Zustandsgrößen und steuert die elektromagnetische Verriegelung 10 entsprechend an, sodass die Verriegelung gelöst wird. In Fällen, in welchen beispielsweise ein Passagier das Schienenfahrzeug verlässt und seinen Passagiersitz 1 in blockierter Position hinterlässt, so kann mittels eines bestimmten Indentifikationsmerkmals der Passagiersitz 1 unabhängig von dem aktuellen Reservierungsstand in seine Gebrauchsposition gebracht werden. Ein solches Indentifikationsmerkmal ist vorzugsweise in Besitz des Zugpersonals.

### Bezugszeichenliste

- 1: Passagiersitz
- 2: Beweglicher Teil der Sitzfläche
- 3: Feststehender Teil der Sitzfläche
- 4: Schwenkvorrichtung
- 5: Beweglicher Teil der Armlehne
- 6: Feststehender Teil der Armlehne
- 7: Schwenkscharnier
- 8: Steuereinrichtung
- 9: Kontrolleinrichtung
- 10: Elektromechanische Verriegelung
- 11: Identifikationseinrichtung
- 12: Display
- 13: Sitzblockiersystem

## Patentansprüche

1. Sitzblockiersystem (13) für ein Schienenfahrzeug, umfassend mindestens einen Passagiersitz (1), welcher bewegliche Komponenten (2, 5) umfasst, und welcher durch Krafteinwirkung auf diese Komponenten (2, 5) entweder in eine Gebrauchsposition oder eine blockierte Position bewegbar ist,
**dadurch gekennzeichnet, dass**
eine elektromechanische Verriegelung (10) an dem Passagiersitz (1) vorgesehen ist, welche die beweglichen Komponenten (2, 5) des Sitzes in ihrer blockierten Position oder der Gebrauchsposition fixieren kann und eine Steuereinrichtung (8) zur Ansteuerung der elektromechanischen Verriegelung (10) vorgesehen ist, welche nach bestimmten Zustandsgrößen die elektromechanische Verriegelung (10) ansteuert, sodass diese die beweglichen Komponenten (2, 5) in der blockierten oder der Gebrauchsposition des Passagiersitzes (1) fixiert.

2. Sitzblockiersystem (13) für ein Schienenfahrzeug nach Anspruch 1,
**dadurch gekennzeichnet, dass**
eine Identifikationseinrichtung (11) in der unmittelbaren Nähe des Passagiersitzes (1) angeordnet ist, welche eingerichtet ist, ein Identifikationsmerkmal aufzunehmen und ein dieses Identifikationsmerkmal representierendes Signal an eine Steuereinrichtung (8) weiterzuleiten.

3. Sitzblockiersystem (13) für ein Schienenfahrzeug nach Anspruch 2,
**dadurch gekennzeichnet, dass**
das Identifikationsmerkmal über eine Funkverbindung oder optisch von der Identifikationseinrichtung (11) aufgenommen wird.

4. Sitzblockiersystem (13) für ein Schienenfahrzeug nach Anspruch 3,
**dadurch gekennzeichnet, dass**
die Funkverbindung auf dem "Near Field Communication" Standard aufgebaut ist.

5. Sitzblockiersystem (13) für ein Schienenfahrzeug nach Anspruch 3,
**dadurch gekennzeichnet, dass**
eine digitale Bilderfassungseinheit zur optischen Aufnahme des Identifikationsmerkmals in der Identifikationseinrichtung (11) vorgesehen ist.

6. Sitzblockiersystem (13) für ein Schienenfahrzeug nach Anspruch 5,
**dadurch gekennzeichnet, dass**
das Identifikationsmerkmal als Barcode, insbesondere als 2-dimensionaler Barcode ausgeführt ist.

7. Sitzblockiersystem (13) für ein Schienenfahrzeug nach Anspruch 2,
**dadurch gekennzeichnet, dass**
die Steuereinrichtung (8) zum Empfang eines, ein Identifikationsmerkmal representierenden Signals von der Identifikationseinrichtung (11) eingerichtet ist und zum Empfang von mindestens einem weiteren Signal von einer übergeordneten Kontrolleinrichtung (9) eingerichtet ist, wobei die Steuereinrichtung (8) diese empfangenen Signale als Zustandsgrößen zur Ansteuerung der elektromechanischen Verriegelung (10) einsetzt.

8. Sitzblockiersystem (13) für ein Schienenfahrzeug nach Anspruch 7,
**dadurch gekennzeichnet, dass**
das weitere Signal von einer übergeordneten Kontrolleinrichtung (9) den aktuellen Reservierungszustand des betreffenden Passagiersitzes (1) representiert.

9. Sitzblockiersystem (13) für ein Schienenfahrzeug nach einem der Ansprüche 1 bis 8,
**dadurch gekennzeichnet, dass**
die beweglichen Komponenten (2) des Passagiersitzes (1) als Abschnitt einer Sitzfläche ausgebildet sind welche schwenkbegeglich gegenüber einem feststehenden Abschnitt (3) dieser Sitzfläche gelagert ist, wobei in blockierter Position des Passagiersitzes (1) die beweglichen Komponenten (2) wenigstens teilweise über dem feststehenden Abschnitt (3) der Sitzfläche zu liegen kommen.

10. Sitzblockiersystem (13) für ein Schienenfahrzeug nach einem der Ansprüche 1 bis 8,
**dadurch gekennzeichnet, dass**
die beweglichen Komponenten (5) des Passagiersitzes (1) als Abschnitt einer Armlehne ausgebildet sind welche schwenkbegeglich gegenüber einem feststehenden Abschnitt (6) dieser Armlehne gelagert ist, wobei in blockierter Position des Passagiersitzes (1) die beweglichen Komponenten (5) über die Sitzfläche geschwenkt sind.

11. Sitzblockiersystem (13) für ein Schienenfahrzeug nach einem der Ansprüche 1 bis 10,
**dadurch gekennzeichnet, dass**
die Krafteinwirkung auf die beweglichen Komponenten (2, 5) des Passagiersitzes (1) zur Bewegung von einer Gebrauchsposition in eine blockierte Position oder von einer blockierten Position in eine Gebrauchsposition ausschließlich durch manuelle Kraft aufgebracht wird.

12. Sitzblockiersystem (13) für ein Schienenfahrzeug nach einem der Ansprüche 1 bis 10,
**dadurch gekennzeichnet, dass**
die Krafteinwirkung auf die beweglichen Komponenten (2, 5) des Passagiersitzes (1) zur Bewegung von einer Gebrauchsposition in eine blockierte Position oder von einer blockierten Position in eine Gebrauchsposition zumindest teilweise durch eine technisch freigemachte Kraft aufgebracht wird.

13. Sitzblockiersystem (13) für ein Schienenfahrzeug nach Anspruch 12,
**dadurch gekennzeichnet, dass**
die technisch freigemachte Kraft eine Federkraft ist.

14. Sitzblockiersystem (13) für ein Schienenfahrzeug nach Anspruch 12,
**dadurch gekennzeichnet, dass**
die technisch freigemachte Kraft eine elektromotorische Kraft ist.
